# EUROPEAN PATENT SPECIFICATION

(11) **EP 3 542 090 B1**
(45) Date of publication and mention of the grant of the patent: **19.04.2023**
(21) Application number: 17808603.9
(22) Date of filing: 17.11.2017
(51) Int. Cl.: F16L 19/04, F16L 19/05, B01J 3/03, C01B 3/50

(54) **A SYSTEM FOR COMPRESSION JUNCTION OF THIN-WALL PIPES**
EIN SYSTEM ZUR KOMPRIMIERUNGSVERBINDUNG VON DÜNNWANDIGEN ROHREN
UN SYSTÈME DE JONCTION PAR COMPRESSION DE TUYAUX À PAROI MINCE

(30) Priority: 18.11.2016 IT 201600116968
(43) Date of publication of application: 25.09.2019
(73) Proprietor: ENEA - Agenzia Nazionale Per Le Nuove Tecnologie, L'Energia e Lo Sviluppo Economico Sostenibile, 00196 Roma (IT)
(72) Inventor: MARINI, Fabrizio, 00044 Frascati (RM) (IT); MORIANI, Andrea, 00125 Acilia (RM) (IT); TOSTI, Silvano, 00044 Frascati (RM) (IT)
(74) Representative: Fezzardi, Antonio
(86) International application number: PCT/IB2017/057210
(87) International publication number: WO 2018/092081

(56) References cited:
- DE-A1- 3 543 539
- DE-B4- 4 042 728
- GB-A- 2 103 743
- US-A- 2 212 183
- US-A- 2 362 686
- US-A- 2 466 317

## Description

### SUMMARY OF THE INVENTION

The invention relates to a device for making fittings of the compression fitting type on thin-wall metallic pipes.

The device according to the invention consists of two special inserts which act on the flared end of a thin-wall pipe, whereby exploiting the compression forces applied by means of appropriate lock nuts. The device adapted to make the flaring of the pipe is also described and claimed.

Typical applications of this type of fitting relate to thin-wall steel pipes used in cryogenic systems and palladium alloy permeator pipes used for separating hydrogen from gaseous mixtures. Finally, if appropriately modified, the device of the invention may also be applied to thick pipes made of mild metal or plastic.

Hereinafter, reference will be made to the accompanying figures, related to some cases of the prior art and to a preferred embodiment of the invention, wherein:
Figure 1 shows an example of double ferrule fitting: 1) body, 2) nut, 3) front ferrule, 4) rear ferrule (from the catalog of BULK S.r.l., Milan, Italy, http://www.bulksrl.it).
Figure 2 shows an example of devices for thin-wall metallic pipes or pipes made of mild metal or plastic: 1) support lock nut, 2) insert (from the catalog of Parker, Parker Hannifin S.r.l., document AI/4015-1/IT 06/2011).
Figure 3 shows an example of "flared"-type fitting for thin pipes made of mild metal. On the left: diagram of the fitting (http://www.elenet.altervista.org/ Elettrotecnica/Climatizzazione-4.html). On the right: example of fitting for copper pipe (http://www.tecnogas.net/it/products/raccordo-per-tubo-rame-con-tenuta-a-cartella).
Figure 4 shows a quick connector fitting for multilayer plastic pipes: fitting Comisa PRONTOFIT (http://www.comisagroup.it/).
Figure 5 is an exploded drawing of the fitting device according to the present invention.
Figure 6 is a mechanical drawing of the fitting made between a thin-wall pipe and a welding flange.
Figure 7 is a mechanical drawing of the components which form the sealed connection.
Figure 8 is an enlarged detail (lower zone in fig. 6) of the first step of contacting between the three connection components according to the invention: it is worth noting the formation of an annular contact on the upper (inner) part of the pipe.
Figure 9 shows the equipment for flaring the thin-wall pipe: i) on the top, the first step of the flaring process, which uses the sealing insert, ii) second step of the flaring process with the use of a frustoconical insert.
Figure 10 shows the equipment used to evaluate the force needed to draw the thin-wall pipe made of stainless steel: i) on the left, detail of the conical penetration tap, ii) on the right, plates of the compression machine.
Figure 11 shows the effects and the consequences of the pressurization test performed to verify the hydraulic seal efficiency of the connection.
Figure 12 is a chart of the stress field at the flaring of the thin-wall pipe made of stainless steel at the depth of 5 mm.
Figure 13 is a chart of the stress field on the set of the three elements (flared pipe, sealing insert end, welding flange end) which implement the compression fitting.
Figures from 14 to 20 diagrammatically show a practical example of procedure and equipment for flaring the pipe which can be used on the field also by personnel without particularly specific skills.

### PRIOR ART

US2362686 discloses a female fitting having an internally threaded rotatable nut, and a male member, having a cylindrical neck which through the medium of externally threaded slips engaged thereon, is adapted to be connected through screw threaded engaging means with the female member, to join two coupling members of a duct endwise together, one of which may be the annular flared end of a tube. A thin packing sleeve is slipped over the end of the tube and has an annular shoulder and an inwardly tapering annular seat. The male member may be a fitting formed with the longitudinal cylindrical neck, which terminates forwardly in a forwardly tapering annular head.

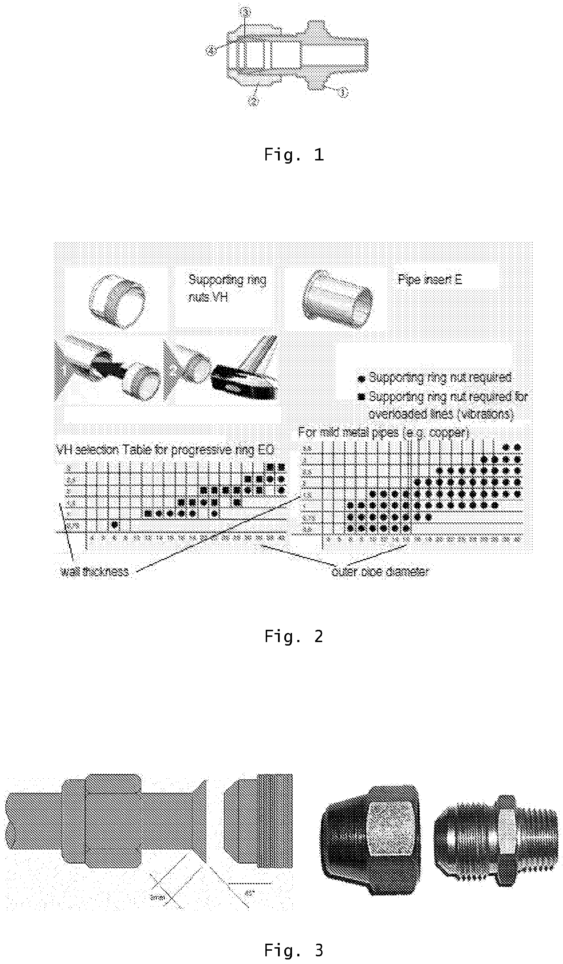

In general, systems which use a double ogive have been developed for making compression fittings, see Fig. 1. These fittings make the seal by means of plastic deformation implemented by the ferrules on the outer wall of the pipe, and so, for their nature, may be applied only to raw metal and thick-wall pipes. For applications on thin-wall metallic pipes or pipes made of mild metal or plastic, these commercial compression fittings are applied by inserting supporting lock nuts (for thin-wall pipes or mild metal pipes) or metallic inserts (for plastic pipes) inside the pipes and not directly, see Fig. 2.

However, the use of supporting lock nuts or inserts has a series of drawbacks:
1) a reduction of the supporting action of the inserts may occur as consequence of the differential thermal expansions with a partial collapse of the pipe and loss of sealing of the fitting in case of operating conditions at temperatures higher than 300 °C,
2) the supporting lock nuts or the inserts constitute additional components with additional costs and increase of the complexity of the fitting assembly operations,
3) the supporting lock nuts and the inserts must be specifically dimensioned on a case-by-case basis, taking into account the dimensions of the thin-wall pipe (diameter, thickness) and the features of the material as shown in the table of Fig. 2,
4) the presence of the inserts reduces the inner section of the pipes actually available for the fluid flow passage, and this, in addition to increasing losses of load, constitutes a problem particularly in the case of small diameter pipes; furthermore, the tube/insert coupling must be very precise.

In the case of thick-wall pipes, such as for example copper pipes, a type of fitting known as "flared" is also available, which makes the sealing by fastening a flange against the end of the 45° flared pipes by means of a specific flanger (see Fig. 3). However, "flared" fittings cannot be applied to thin-wall metallic pipes because the high plastic deformation consequent to the 45° flaring would cause a significant reduction of the useful thickness and the possible breakage of the pipe itself.

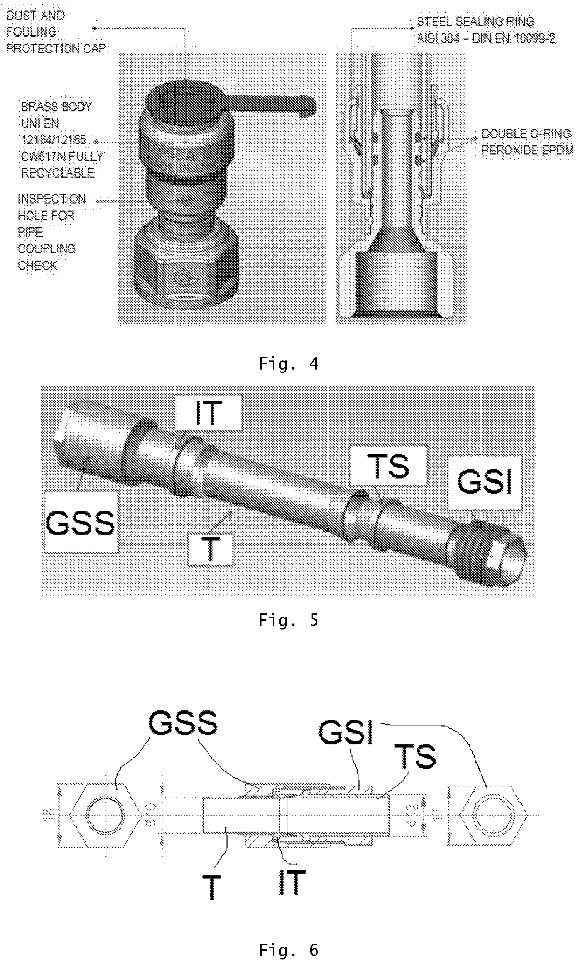

Finally, quick connector fittings are present on the market for multilayer plastic pipes in which the sealing is guaranteed by the action of O-rings housed in a metallic body coupling with regards to the multilayer pipe (see Fig. 4). Obviously, the presence of O-rings limits the field of application of this type of fittings in terms of operating temperatures and of chemical inertia of the process fluids used.

Furthermore, in the case of thin-wall palladium alloy pipes, such as those developed in the ENEA laboratories in Frascati for separating ultrapure hydrogen [1, 2], the use of compression fittings by means of the use of supporting lock nuts or inserts has implied a further drawback. Indeed, the hydrogenation cycles to which these pipes are subjected in the typical operating conditions of the hydrogen separation processes cause much greater expansions of the palladium alloys than those of the supporting lock nuts or of the steel inserts, whereby emphasizing the problem indicated in item 1) above. On the other hand, as necessary in this case, it would be very costly to use supporting lock nuts or inserts made of precious alloy. Furthermore, thin-wall pipes made of palladium are made commercially with higher tolerances with respect to mechanical processing standards and often require making of supporting lock nuts or inserts on a case-by-case basis.

### DESCRIPTION OF THE INVENTION

It is the object of the invention a fitting device for thin-wall metallic pipes which may be advantageously applied also to thick wall pipes made of mild metal or plastic.

The invention is defined by a system according to claim 1.

The new device makes this type of fitting by exploiting compression forces applied on the appropriately flared pipe to be connected, which cause the elastic, and not plastic, yield of the walls of the two fitting inserts. By first approximation, thin-wall metal pipes are those pipes made of non-mild metal with a thickness/diameter ratio smaller than 0.03. Obviously, such ratio may be greater in the case of metals or other ductile materials: the experimental tests and calculation procedures which make it possible to verify the applicability of this type of fitting to pipes of different thickness made of different materials on a case-by-case basis are discussed below. The exploded drawing of the described fitting device is diagrammatically shown in figure 5.

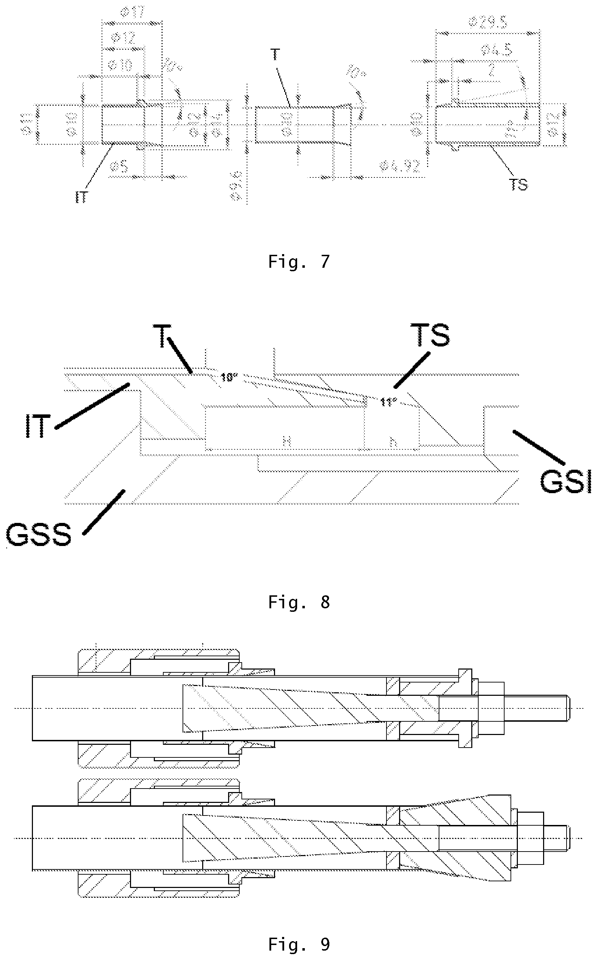

A mechanical drawing, shown in figure 6, shows only by way of example, a particular application for pipes made of stainless steel with an outer diameter of 10 mm and thickness of 0.25 mm. The pipe T to be connected is flared by an angle comprised between 5-15°, preferably of 10°, for a depth of about 5 mm. During fitting, the flared wall is subjected to a compression applied by the welding flange TS pushed onto the sealing insert IT by the screwing of the lower lock nut GSI onto the upper lock nut GSS. The geometric dimensions of the components of the fitting device in the aforesaid case of pipe with outer diameter of 10 mm and thickness of 0.25 mm are shown in mechanical drawing in figure 7.

The particularities of the device according to the present invention reside precisely in the appropriate choice of the flaring angles of the components which make the connection. As shown in greater detail below, the taper ratio of 10° guarantees achieving a sealing connection which is immune from possible loosening caused by thermal expansions due to possible use at high temperature. Furthermore, the taper ratio of just 10° makes the device applicable on materials which are not very malleable and not incline to excessive plastic deformations.

The drawing in figure 8 shows the particular choice of making the flaring of one of the two fastening components of the pipe T, with an angle slightly greater than the flaring angle of the pipe itself. For example, in the case in which the pipe T has a flaring of 10°, the making in the welding flange TS of a flaring of 11° makes it possible to obtain an initially annular contact zone on the upper part of the flaring of the pipe T which, proceeding with the tightening of the two lock nuts, determines a successive elastic yield of the sealing insert IT having taper ratio of 10°, like that of the pipe T.

According to a further particular feature of the present invention, the elastic yield will mainly concern the sealing insert IT which will undergo a mechanical bending stress greater than that of the welding flange TS: This behavior is determined by the fact that a greater height H of the arm of the bending force, which is greater by a factor preferably equal to 2.8 with respect to the height h related to the welding flange TS, is envisaged for the sealing insert IT (fig. 8).

The flaring of the pipe T can be made by using specific equipment shown in figure 9. The upper part of figure 9 shows the first step of the flaring process of the pipe T: In this step, a structure is fixed inside the pipe itself which will make it possible to contain/contrast the force needed to flare the pipe T. It is worth noting that, according to the present invention, the pressure applied by the two inner coaxial cones is also supported by the sealing insert IT (as shown in figure 5), which will then contribute to making the fitting, as described above. Once the containing structure is fixed, in the second step the cylindrical sealing insert 2 is replaced, which also determines the flaring depth with a frustoconical insert 3 to actually make the flaring. This second step is shown in the lower part of figure 9.

Such equipment has the particularity that it can be used "on the field" by personnel who is not particularly specialized; Furthermore, it makes it possible to use any other additional measuring and positioning equipment, allowing a simplification of the step of preparing of the components.

Before proceeding, the method and the equipment for flaring the pipe T is described below, with reference to figures from 14 to 20.

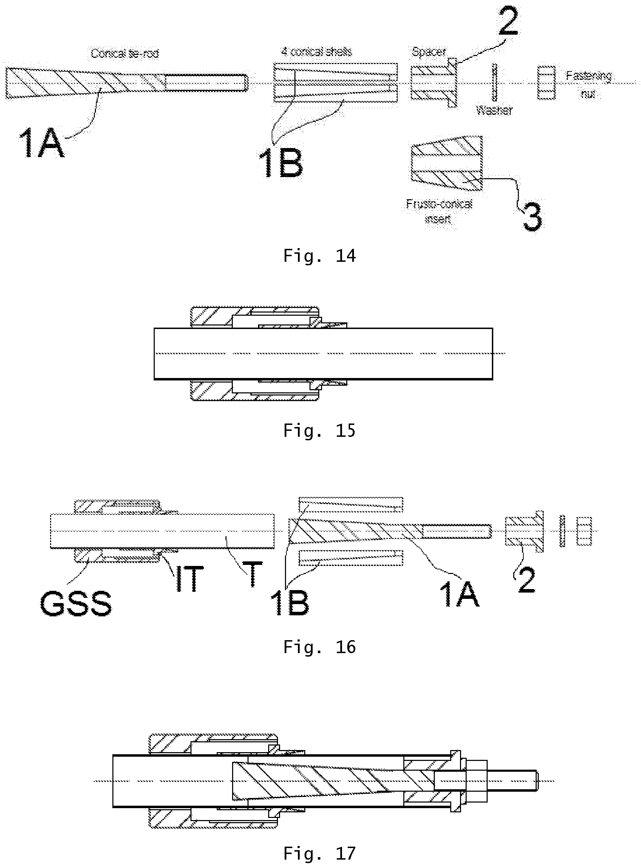

The equipment for flaring the pipe, as shown in figure 14, consists of a conical tie-rod 1A, of at least two (preferably four) female conical shells 1B, of a spacer 2, of a frustoconical insert 3, of a washer and of a fastening nut.

The use of the equipment envisages the following steps of flaring of the pipe.

The upper ring nut GSS and in the sealing insert IT are inserted in the pipe T to be flared, as shown in figure 15.

As shown in figure 16, the conical tie-rod 1A is inserted in the pipe T with the preferably four female conical shells 1B are laid on its outer surface.

The spacer 2 and the washer are inserted in the threaded axis of the conical tie-rod 1A and, as shown in figure 17, the specific nut is tightened to the specific nut to make the spacer 2 abut against the edge of the pipe T and against the female conical shells 1B, thus obtaining the locking of the conical tie-rod assembly 1A and conical shells 1B on the pipe T at the same time.

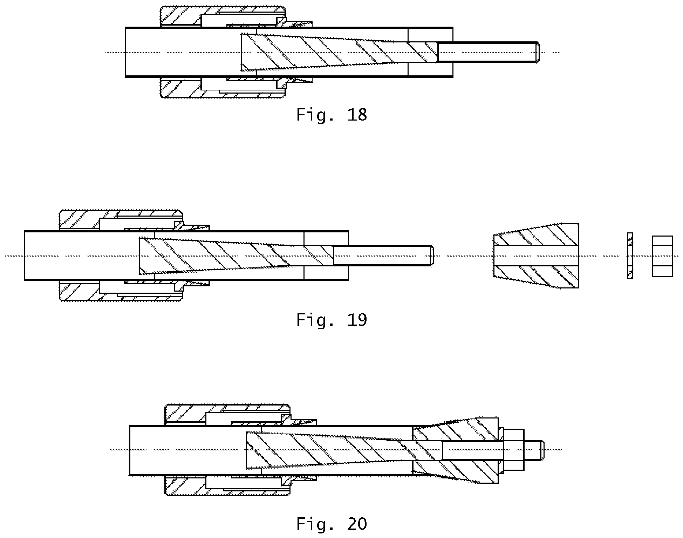

Once the conical tie-rod 1A and the conical shells 1B are locked on the pipe T, the nut is loosened by removing it together with the spacer 2, as shown in figure 18, after which the frustoconical insert 3 is inserted in the threaded axis of the conical tie-rod 1A, as shown in figure 19.

At this point, the tube T is flared by tightening the nut (figure 20) by plastically deforming it. Advantageously, the conical shells 1B constitute the abutment for the frustoconical insert 3 and guarantee obtaining a flaring with an angle of 10° for a depth of 5 mm, with a plastic deformation which does not damage or excessively deform the material of the pipe T.

### Performed experiments

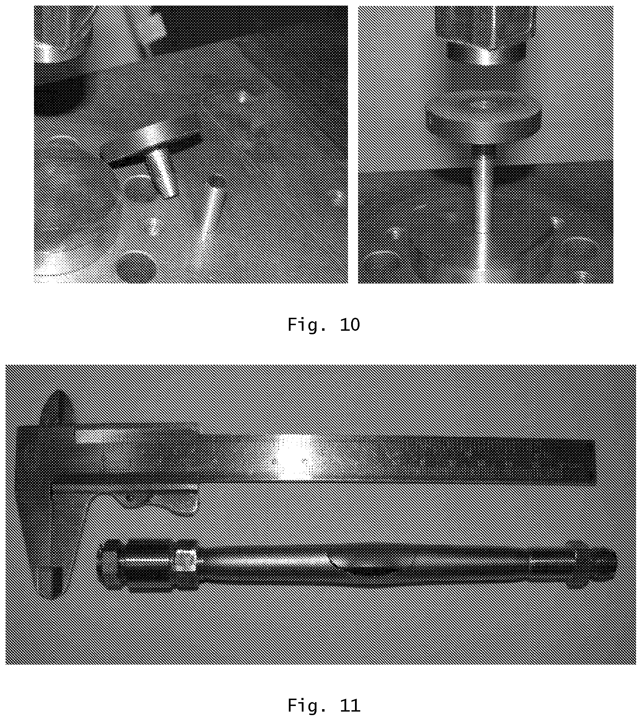

The forces needed to make the flaring of 10° were measured as a function of the penetration during the flaring process by executing experimental tests. For this purpose, an INSTRON 5500H1552 traction and compression test machine was used equipped with a 100 kN load cell able to control the movement and the position of the crosshead. Figure 10 shows the equipment used to perform the test on a thin-wall pipe made of stainless steel.

An average value of the applied load of 1152 N for achieving a penetration depth of 5 mm was measured in three drawing tests on stainless steel pipes with outer diameter of 9.6 mm and thickness 0.25 mm.

The quality of the fitting was then verified by means of a pressurization test with water. The test result demonstrated the efficiency of the fitting, which held the hydraulic sealing up until the failure of the pipe, which occurred at about 30 MPa. Figure 11 shows the pipe after the pressurization test and the connection made with the device which is the object of the patent.

The mechanical properties of the pipe made of steel used in the fitting tests were determined by means of laboratory tests performed with INSTRON 5500H1552 traction machine. In particular, such tests identified the longitudinal modulus of elasticity E = 217 GPa, the yield stress σ_{Y} = 290 MPa and the maximum unitary load σₘ = 675 MPa.

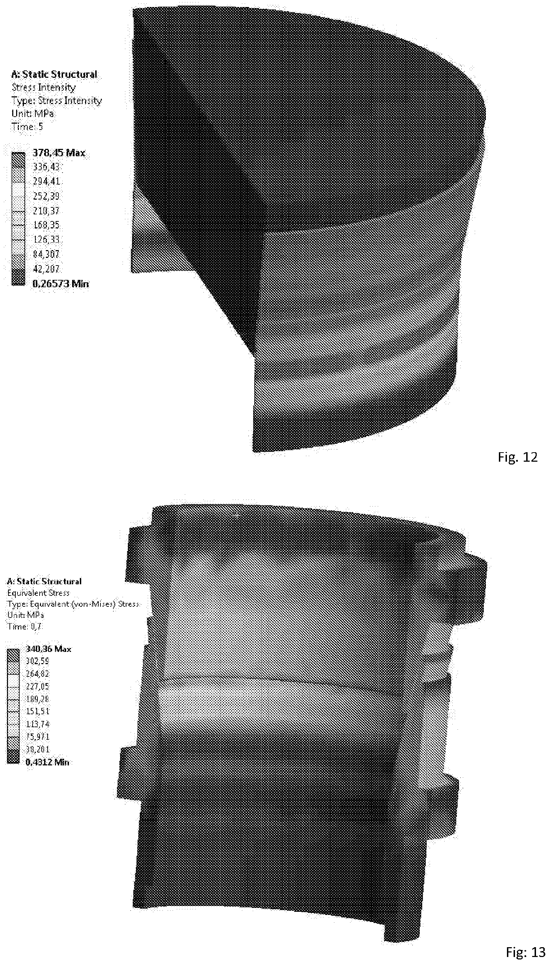

The results of these mechanical characterization tests were used to calculate the mechanical stresses in the flared part by means of the Ansys Workbench 15.0 finite element code, by adopting a model for representing the plastic behavior of the material of the "bilinear isotropic hardening" type. Figure 12 shows the stress field on the drawn pipe at a depth of 5 mm.

Furthermore, the tightening torque needed to obtain a sealing connection, again in the case of stainless steel pipe with outer diameter of 9.6 mm and thickness of 0.25 mm, was calculated using the finite element code. The purpose of this activity was to evaluate the axial force capable of determining a sufficient elastic yield of the sealing insert IT so as to guarantee a contact which is constituted by an "annular band" and is not simply "linear and circular", which makes it possible to correct, for example, possible ovalizations of the pipe T and possible irregularities of the pipe itself. This elastic yield may further compensate for possible differential thermal expansions in applications in which thermal cycles are made and materials with different thermal expansion coefficients are used. The results of the finite element analysis are shown in figure 13. The stress field shown in the figure determines an elastic yield of the sealing insert IT without establishing any plastic deformation. Such configuration is achieved with an axial load of 5688 N. Taking into account that the two lock nuts, lower GSI and upper GSS, have a M14 threading with pitch of 1.25 mm and considering a friction coefficient of 0.3 between the materials, the tightening torque is calculated in Mₜ = 12.5 N m. This value may be easily applied by an operator, using normal workshop tools, thus demonstrating the feasibility of the type of suggested fitting.

The efficacy of this type of fitting in the case of pipes of different thickness made with materials having different mechanical features may be verified by means of finite elements codes, which may suggest changes to be made to the geometry of the fitting components. For example, the analysis of the mechanical stresses makes it possible to define the angle and the depth of the flaring capable of guaranteeing the quality of the fitting, on a case-by-case basis, as the pipe thickness and the mechanical properties of the considered pipe vary.

### Potential applications

The object of the invention is a compression fitting which can be applied to thin-wall metal pipes or to thick-wall pipes made of mild metal or plastic.

This type of compression fitting may be practically made for pipes of diameter up to 1-2 inches. The typical applications of these thin-wall steel pipes concern cryogenics, in which pipes of this type allow the flushing of cryogenic fluids, whereby minimizing heat exchange. The potential market is very broad and is aimed at industrial applications (production of technical gases by means of cryogenic techniques, pharmaceutical and food-processing industries etc.) and applications in research laboratories (particle physics, superconductivity, etc.).

Another important application relates to permeator pipes made of palladium alloy used for separating hydrogen from gaseous mixtures. These pipes must be thin in order to reduce the costs of the precious metal and to maximize the permeation flows. This fitting advantageously makes it possible to increase the efficiency and reliability of the devices for producing ultrapure hydrogen and thus to make more effective the technological hydrogen platform in view of the development of low-environmental impact energy systems.

### Literature

[1] "Procedimento di saldatura di lamine sottili di leghe metalliche selettivamente permeabili all'idrogeno, in particolare per la realizzazione di dispositivi a membrana e apparato per la sua realizzazione", Attestato di brevetto n. 0001317878 del 15.07.2003 - "Method of bonding thin foils made of metal alloys selectively permeable to hydrogen, particularly providing membrane devices, and apparatus for carrying out the same" - European Patent EP 1184125
[2] "Reattore a membrana per il trattamento di gas contenti trizio", Attestato di brevetto n. 0001401192 del 12.07.2013 - "Membrane reactor for the treatment of gases containing tritium" European Patent Grant EP 2582618 of 14.05.2014

## Claims

1. A system for compression fitting pipes (T), wherein the system comprises at least one pipe (T) and a device comprising, in combination:
- a lower lock nut (GSI) with a threading,
- a welding flange (TS) provided with conical outer edge which is tapered towards its free end and with a ring for axial abutment with said lower lock nut (GSI),
- an upper lock nut (GSS) with a threading adapted to engage the threading of the lower lock nut (GSI),
- a sealing insert (IT) provided with conical inner edge which widens towards its free end and provided with an axial ring abutting with said upper lock nut (GSS),
wherein, in order to obtain a compression fitting of the pipe (T) with the respective welding flange (TS), the free end of the pipe (T) which is connectable to the welding flange (TS) is provided with an outward flaring having an inclination angle which is smaller than the inclination angle of the conical edge present on the corresponding free end of the welding flange (TS), and wherein the axial compression closing of the fitting is obtained by mutually fastening the two lock nuts (GSS, GSI); wherein the inclination angle of the welding flange (TS) is greater than the inclination angle of the conical edge of the sealing insert (IT) and the flaring angle of the pipe (T) is equal to the inclination angle of the sealing insert (IT), so that the axial compression closing of the fitting determines an elastic, and not plastic, yield of the walls of the welding flange (TS) and the sealing insert (IT).

2. A system according to claim 1, **characterized in that** in order to make a fitting which works as cap for the pipe (T) to which it is applied, the welding flange (TS) is closed at the free end opposite to the one provided with conical edge.

3. A system according to claim 1, **characterized in that** in order to make a fitting which makes it possible to connect the pipe (T) to different pipe elements, either the welding flange (TS) consists of a "T"-shaped or cross-shaped element or the other end has a different diameter.

4. A system according to claim 1, **characterized in that** in order to make a fitting which makes it possible to connect the pipe (T) to different pipe elements, the welding flange (TS) has a previously standardized connection type, preferably VCR or Swagelok, at the other end to be able to connect the pipe (T) to different pipe connection systems.

5. A system according to claim 1, **characterized in that** the flaring angle of the pipe (T) is comprised between 5 and 15°, preferably equal to 10°.

6. A system according to the preceding claim, **characterized in that** the inclination angle of the welding flange (TS) is equal to 11° and the flaring angle of the pipe (T) is 10°.

7. A system according to claim 1, **characterized in that**, in order to obtain that the elastic yield during the fastening of the fitting mainly concerns the sealing insert (IT), which will undergo a mechanical bending stress greater than that of the welding flange (TS), a height (H) of the arm of the bending force greater than the height (h) related to the welding flange (TS) is provided for the sealing insert (IT).

8. A system according to the preceding claim, **characterized in that** said height (H) related to the sealing insert (IT) is greater than the height (h) related to the welding flange (TS) by a factor preferably equal to 2.8.

9. A system according to claim 1, **characterized in that** said flaring of the pipe (T) necessary for the fitting can be obtained by means of equipment consisting of:
- a conical tie-rod (1A) with a threaded leg,
- at least two female conical shells (1B),
- a spacer (2),
- a frustoconical insert (3),
- a washer and a fastening nut,
wherein the fastening nut is adapted to be screwed onto the conical tie-rod (1A) to axially push the frustoconical insert (3) against the pipe (T) causing the controlled flaring of the pipe itself.

## Patentansprüche

1. System zur Klemmverschraubung von Rohren (T),
wobei das System mindestens ein Rohr (T) und eine Vorrichtung umfasst, die in Kombination Folgendes umfasst:
- eine untere Kontermutter (GSI) mit einem Gewinde,
- einen Schweißflansch (TS), der mit einem konischen Außenrand bereitgestellt ist, die sich zu seinem freien Ende hin verjüngt, und mit einem Ring zum axialen Anliegen an der unteren Kontermutter (GSI),
- eine obere Kontermutter (GSS) mit einem Gewinde, das zum Eingreifen in das Gewinde der unteren Kontermutter (GSI) ausgelegt ist,
- einen Dichtungseinsatz (IT), der mit einem konischen Innenrand bereitgestellt ist, der sich zu seinem freien Ende hin erweitert, und der mit einem axialen Ring bereitgestellt wird, der an der oberen Kontermutter (GSS) anliegt,
wobei, um eine Klemmverschraubung des Rohres (T) mit dem jeweiligen Schweißflansch (TS) zu erhalten, das freie Ende des Rohres (T), das mit dem Schweißflansch (TS) verbindbar ist, mit einer nach außen gerichteten Aufweitung mit einem Neigungswinkel bereitgestellt ist, der kleiner ist als der Neigungswinkel des konischen Randes, der an dem entsprechenden freien Ende des Schweißflansches (TS) vorhanden ist, und wobei das axiale Klemmschließen der Verschraubung durch gegenseitiges Befestigen der beiden Kontermuttern (GSS, GSI) erhalten wird; wobei der Neigungswinkel des Schweißflansches (TS) größer ist als der Neigungswinkel des konischen Randes des Dichtungseinsatzes (IT) und der Aufweitungswinkel des Rohres (T) gleich dem Neigungswinkel des Dichtungseinsatzes (IT) ist, so dass das axiale Klemmschließen der Verschraubung ein elastisches, und kein plastisches, Nachgeben der Wände des Schweißflansches (TS) und des Dichtungseinsatzes (IT) bestimmt.

2. System nach Anspruch 1, **dadurch gekennzeichnet, dass** zum Herstellen einer Verschraubung, die als Kappe für das Rohr (T) fungiert, auf das sie aufgebracht ist, der Schweiß flansch (TS) an dem freien Ende gegenüber von dem, das mit einem konischen Rand bereitgestellt ist, geschlossen ist.

3. System nach Anspruch 1, **dadurch gekennzeichnet, dass** zum Herstellen einer Verschraubung, die es ermöglicht, das Rohr (T) mit verschiedenen Rohrelementen zu verbinden, entweder der Schweißflansch (TS) aus einem "T"-förmigen oder kreuzförmigen Element besteht oder das andere Ende einen anderen Durchmesser aufweist.

4. System nach Anspruch 1, **dadurch gekennzeichnet, dass** zur Herstellung einer Verschraubung, die es ermöglicht, das Rohr (T) mit unterschiedlichen Rohrelementen zu verbinden, der Schweißflansch (TS) einen bereits genormten Verbindungstyp, vorzugsweise VCR oder Swagelok, am anderen Ende aufweist, damit sich das Rohr (T) mit unterschiedlichen Rohrverbindungssystemen verbinden lässt.

5. System nach Anspruch 1, **dadurch gekennzeichnet, dass** der Aufweitungswinkel des Rohres (T) zwischen 5 und 15° liegt, vorzugsweise gleich 10° beträgt.

6. System nach dem vorangehenden Anspruch, **dadurch gekennzeichnet, dass** der Neigungswinkel des Schweißflansches (TS) gleich 11° beträgt und der Aufweitungswinkel des Rohres (T) 10° beträgt.

7. System nach Anspruch 1, **dadurch gekennzeichnet, dass**, um zu erreichen, dass das elastische Nachgeben während des Fixierens der Verschraubung hauptsächlich den Dichtungseinsatz (IT) betrifft, der einer größeren mechanischen Biegebeanspruchung als der Schweißflansch (TS) unterliegt, für den Dichtungseinsatz (IT) eine Höhe (H) des Arms der Biegekraft bereitgestellt wird, die größer ist als die Höhe (h) bezogen auf den Schweiß flansch (TS).

8. System nach dem vorangehenden Anspruch, **dadurch gekennzeichnet, dass** die Höhe (H) in Bezug auf den Dichtungseinsatz (IT) um einen Faktor von vorzugsweise gleich 2,8 größer ist als die Höhe (h) in Bezug auf den Schweiß flansch (TS).

9. System nach Anspruch 1, **dadurch gekennzeichnet, dass** die für die Verschraubung erforderliche Aufweitung des Rohres (T) mit Hilfe von Ausrüstung erhalten werden kann, bestehend aus:
- einer konischen Zugstange (1A) mit einem Gewindeschenkel,
- mindestens zwei konischen Aufnahme schalen (1B),
- einem Abstandshalter (2),
- einem kegelstumpfförmigen Einsatz (3),
- einer Unterlegscheibe und einer Befestigungsmutter,
wobei die Befestigungsmutter dazu ausgelegt ist, auf die konische Zugstange (1A) aufgeschraubt zu werden, um den kegelstumpfförmigen Einsatz (3) axial gegen das Rohr (T) zu drücken, wodurch die kontrollierte Aufweitung des Rohrs selbst bewirkt wird.

## Revendications

1. Système pour le raccordement par compression de tuyaux (T), dans lequel le système comprend au moins un tuyau (T) et un dispositif comprenant, en combinaison :
- un contre-écrou inférieur (GSI) doté d'un filetage,
- une bride de soudage (TS) dotée d'un bord externe conique qui se rétrécit vers son extrémité libre et dotée d'une bague pour une butée axiale contre ledit contre-écrou inférieur (GSI),
- un contre-écrou supérieur (GSS) doté d'un filetage adapté pour se mettre en prise avec le filetage du contre-écrou inférieur (GSI),
- un insert d'étanchéité (IT) doté d'un bord interne conique qui s'élargit vers son extrémité libre et doté d'une bague axiale en butée contre ledit contre-écrou supérieur (GSS),
dans lequel, afin d'obtenir un raccordement par compression du tuyau (T) avec la bride de soudage (TS) respective, l'extrémité libre du tuyau (T) qui est apte à être reliée à la bride de soudage (TS) est dotée d'un évasement vers l'extérieur ayant un angle d'inclinaison qui est inférieur à l'angle d'inclinaison du bord conique présent sur l'extrémité libre correspondante de la bride de soudage (TS), et dans lequel la fermeture par compression axiale du raccord est obtenue par le serrage mutuel des deux contre-écrous (GSS, GSI) ; dans lequel l'angle d'inclinaison de la bride de soudage (TS) est supérieur à l'angle d'inclinaison du bord conique de l'insert d'étanchéité (IT) et l'angle d'évasement du tuyau (T) est égal à l'angle d'inclinaison de l'insert d'étanchéité (IT), de sorte que la fermeture par compression axiale du raccord détermine une déformation élastique, et non plastique, des parois de la bride de soudage (TS) et de l'insert d'étanchéité (IT).

2. Système selon la revendication 1, **caractérisé en ce que**, afin de fabriquer un raccord qui fonctionne comme un capuchon pour le tuyau (T) sur lequel il est appliqué, la bride de soudage (TS) est fermée à l'extrémité libre opposée à celle munie d'un bord conique.

3. Système selon la revendication 1, **caractérisé en ce que**, afin de fabriquer un raccord qui permet de relier le tuyau (T) à différents éléments de tuyau, soit la bride de soudage (TS) est constituée d'un élément en forme de « T » ou en forme de croix, soit l'autre extrémité possède un diamètre différent.

4. Système selon la revendication 1, **caractérisé en ce que**, afin de fabriquer un raccord qui permet de relier le tuyau (T) à différents éléments de tuyau, la bride de soudage (TS) possède un type de liaison précédemment normalisé, de préférence VCR ou Swagelok, à l'autre extrémité pour être apte à relier le tuyau (T) à différents systèmes de liaison de tuyaux.

5. Système selon la revendication 1, **caractérisé en ce que** l'angle d'évasement du tuyau (T) est compris entre 5 et 15°, de préférence égal à 10°.

6. Système selon la revendication précédente, **caractérisé en ce que** l'angle d'inclinaison de la bride de soudage (TS) est égal à 11° et l'angle d'évasement du tuyau (T) est de 10°.

7. Système selon la revendication 1, **caractérisé en ce que**, afin d'obtenir que la déformation élastique au cours du serrage du raccord concerne principalement l'insert d'étanchéité (IT), qui subira une contrainte de flexion mécanique supérieure à celle de la bride de soudage (TS), une hauteur (H) du bras de la force de flexion supérieure à la hauteur (h) se rapportant à la bride de soudage (TS) est fournie pour l'insert d'étanchéité (IT).

8. Système selon la revendication précédente, **caractérisé en ce que** ladite hauteur (H) se rapportant à l'insert d'étanchéité (IT) est supérieure à la hauteur (h) se rapportant à la bride de soudage (TS) d'un facteur de préférence égal à 2,8.

9. Système selon la revendication 1, **caractérisé en ce que** ledit évasement du tuyau (T) nécessaire pour le raccordement peut être obtenu au moyen d'un équipement constitué de :
- une biellette conique (1A) avec une patte filetée,
- au moins deux coques coniques femelles (1B),
- une entretoise (2),
- un insert tronconique (3),
- une rondelle et un écrou de serrage,
dans lequel l'écrou de serrage est adapté pour être vissé sur la biellette conique (1A) pour pousser axialement l'insert tronconique (3) contre le tuyau (T) provoquant l'évasement contrôlé du tuyau lui-même.
